# EUROPEAN PATENT SPECIFICATION

(11) **EP 0 545 692 B1**
(45) Date of publication and mention of the grant of the patent: **17.07.1996**
(21) Application number: 92311012.6
(22) Date of filing: 02.12.1992
(51) Int. Cl.: H02K 5/167

(54) **A bearing device for rotors in miniature motors**
Lagereinrichtung für Rotoren in Miniaturmotoren
Dispositif de palier pour rotors dans des moteurs miniatures

(30) Priority: 03.12.1991 JP 318909/91
(43) Date of publication of application: 09.06.1993
(73) Proprietor: MABUCHI MOTOR KABUSHIKI KAISHA, Matsudo-shi, Chiba-ken (JP)
(72) Inventor: Mabuchi, Kazuichi, Mabuchi Motor K.K., Matsudo-shi, Chibaken (JP); Satou, Makoto, Mabuchi Motor K.K., Matsudo-shi, Chibaken (JP); Egawa, Yoshiaki, Mabuchi Motor K.K., Matsudo-shi, Chibaken (JP)
(74) Representative: Hitchcock, Esmond Antony

(56) References cited:
- WO-A-91/06146
- DE-B- 1 300 370
- FR-A- 2 054 015
- US-A- 2 500 978

## Description

This invention relates generally to a bearing device for rotors in miniature electric motors. Such miniature motors are used for example as vehicle door-window actuators and other similar equipment. The invention particularly relates to the fitment of a bearing to the retaining body of the bearing device.

French Specification No. 2,054,015 describes a bearing which comprises a cap member adapted to be mounted against the end plate of an electric motor. A bearing race is held against a concave portion of the end plate by three or more resilient fingers extending axially from the cap member. The end of each finger is chamfered to complement the spherical surface of the bearing race.

A known bearing device for miniature motors has a retaining body of resin material defining a recess with an annular base and an annular flange at its open face, connected by an outer cylinder. An inner cylinder extends from the base towards the open face, and has an inner surface shaped to accommodate a spherical bearing. The outer cylinder is adapted to be press-fit into a retention element, and the bearing is also a press-fit into the inner cylinder. The bearing is held in place in the inner cylinder by projections, and the cylinders are connected by bridging pieces. This construction of retaining body can be difficult to mould in resin material, and give rise to problems relating to heat dissipation from the motor and the forces holding the bearing in place.

The present invention addresses the above problems of the prior art, and proposes a bearing device in which the base and the flange of the retaining body are connected by a plurality of circumferentially spaced members, and a plurality of columns are circumferentially spaced on the base and extend towards the flange, which columns are adapted to support a spherical bearing for the rotor shaft therebetween. The inside surfaces of the free ends of the support columns and inner circumferential surfaces formed by boundary portions of the connecting members and the base define a spherical surface for receiving a said bearing, the boundary portions of the support columns and the base being spaced from the spherical surface. Preferably, the support columns and the connecting members are arranged alternately around the base.

In preferred embodiments of the invention, the outer surfaces of the connecting members and of the support columns define circles, that of the connecting members being greater than that of the columns. The respective surfaces are usually substantially cylindrical. When fitted to a retention element in a manner similar to the device of the prior art, the retention element will normally have a circular cross-section of diameter greater than that of the circle defined by the support columns, but less than that defined by the connecting elements.

A prior art bearing device and an embodiment of the present invention will now be described by way of example and with reference to the accompanying schematic drawings wherein:
Figure 1 is a longitudinal partly sectional side view showing the general construction of a miniature motor of the type to which this invention relates;
Figures 2 and 3 are a longitudinal sectional view and a plan view illustrating a known bearing device of the kind shown in Figure 1;
Figure 4 is a plan view illustrating a bearing device in accordance with one embodiment of the present invention;
Figure 5 is a sectional view taken along line A-A in Figure 4; and
Figure 6 is a perspective view of the bearing retaining body alone, shown in Figures 4 and 5.

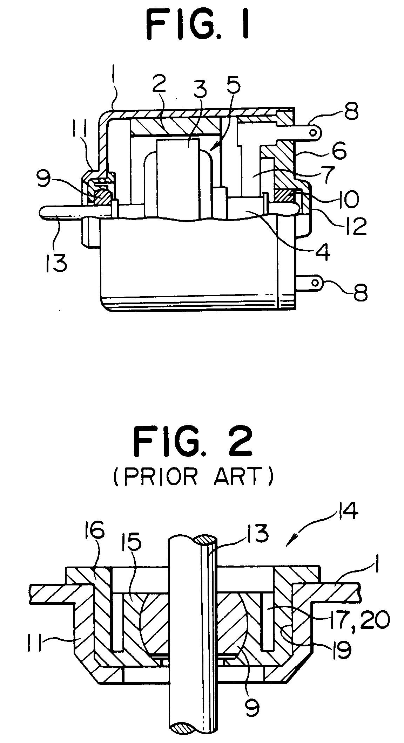

In the miniature motor shown in Figure 1, a housing 1 formed of a metallic material, such as mild steel, has the form of a bottomed hollow cylinder, and has an arc-segment-shaped permanent magnet 2 on the inner circumferential surface thereof. A rotor 5 consisting of an armature 3 facing the permanent magnet 2 and a commutator 4, is mounted in bearings 9,10 disposed in the housing 1 and an end plate 6 made of the same metallic material as that of the housing 1, and fitted to the open end of the housing 1. Brush arms 7 are provided to make sliding contact with the commutator 4, fitted to the end plate 6, and connected to input terminals 8 for coupling to an electric power supply (not shown) to drive the motor in the normal way. The bearing 9,10 are fitted to bearing retaining parts 11 and 12 provided by embossing the housing 1 and the end plate 6.

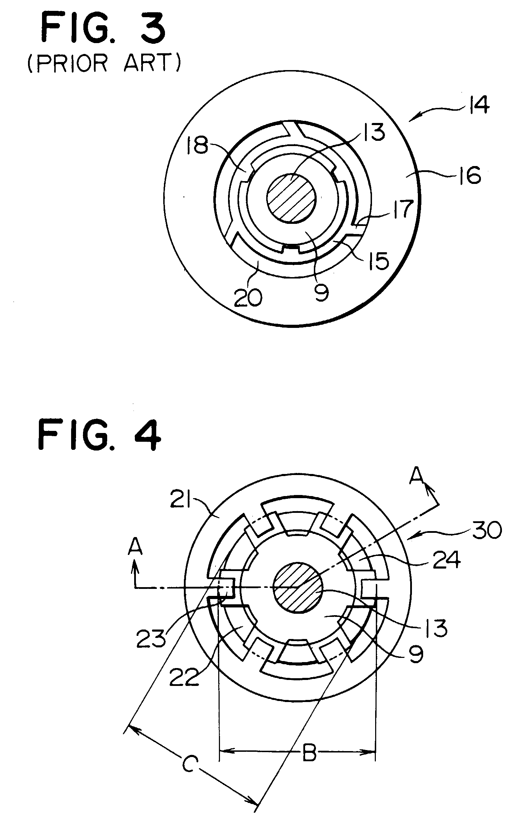

The bearing device shown in Figures 2 and 3 has a bearing retaining body 14 comprising an inner cylindrical member 15 and an outer cylindrical member 16, connected by bridging pieces 17. The inside surface of the inner cylindrical member 15 is formed into a spherical surface to accommodate the bearing 9 of which the outer circumferential surface is also spherical. Three stopper parts 18 are provided on the upper end of the inner cylindrical member 15. The bridging pieces 17 connect the inner and outer cylindrical members 15 and 16 in an oblique or tangential direction. The body 14 is made of polyacetal resin, for example, or another suitable resin material having high abrasion resistance, and the outside diameter thereof is typically less than 10 mm. The thickness of the side walls of the inner and outer cylindrical members 15 and 16 is normally less than 1 mm, and the axial height less than 5 mm.

When the retaining body 14 is press-fitted into the retaining part 19 provided on the housing 1, the outer cylindrical member 16 is elastically deformed, but held in place by its inherent resilience. When the bearing 9 is press-fitted into the inner cylindrical member 15 of the bearing retaining body 14, the periphery of the open end of the inner cylindrical member 15 is slightly extended, but the bearing 9 is similarly held in place by the resilience of the inner cylindrical member 15. The axial movement of the bearing 9 is restricted by the stopper parts 18. With this construction, the bearing 9 can rotate in the inner cylindrical member 15, allowing it to self-align in the motor.

The bearing retaining body 14 is typically manufactured by injection moulding means using moulding dies. A stationary mould defining the outer profile of the outer cylindrical member 16 is mated with a movable die defining the inner profile of the outer cylindrical member 16 and the inner and outer profiles of the inner cylindrical member 15, and thermoplastic resin is poured into the cavity formed. After being allowed to cool to a predetermined temperature, the movable die is moved in the axial direction, then the formed bearing retaining body 14 is moved as it adheres to the movable die. To extract the bearing retaining body 14 from the die, a movable core having a crescent-shaped cross section corresponding to a gap between the inner cylindrical member 15 and the outer cylindrical member 16 is pulled out in the axial direction, and then the bearing retaining body 14 can be extracted in the axial direction. At this moment, the periphery of the open end of the inner cylindrical member 15 is slightly elongated by undercutting, but restored to the predetermined dimensions by the restoring force inherent in the resin material.

Since the thickness of the movable core having a crescent-shaped cross section corresponding to the gap 20 in the moulding dies can be as small as 0.4 mm, for example, the movable core can break during the moulding operation. If the thickness of the movable core is increased to maintain the strength thereof, however,the outside diameter of the outer cylindrical member 16 also has to be increased to maintain the side wall thickness. Accordingly the inside diameter of the retaining part 19 to be provided on the housing 1 also has to be increased. This may cause interference among the related surrounding members, and increase the overall size of the device. Thus, the ever-increasing need for reducing the size and thickness of the device, and the size of the motor itself, cannot be met.

With the bearing retaining body 14 of Figures 2 and 3, as the entire inner surface of the inner member 15 is in contact with the bearing 9, the heat transmitted from a coil (not shown) constituting the armature tends to be accumulative, and is unlikely to dissipate smoothly. The heat resistance of the entire motor thus deteriorates. To cope with this, the bearing retaining body 14 can be made of a resin material having high heat resistance, but dramatic improvement in the heat resistance of resin materials cannot be readily expected. Further, a resin material having high heat resistance is usually poor in mouldability.

Since the bearing retaining body 14 has such a construction that the bearing 9 is held in place by the entire inner circumferential surface of the ring-shaped inner cylindrical member 15, it is very difficult to adjust the force for holding the bearing 9. If the heat generated by the armature coil is transmitted to the bearing retaining body 14, as noted above, each portion thereof tends to extend and deform due to thermal expansion. Such changes are not necessarily uniform. Thus, the force holding the bearing 9 becomes uneven, and can adversely affect the self-aligning function of the bearing.

The bearing retaining body 30 of Figures 4 to 6 has a flange 21 and a base member 22, both formed into a ring shape, and connected by a plurality of connecting members 23. A plurality of supporting columns 24 are provided on the base member 22, and the entire assembly is integrally formed in a thermoplastic resin material such as polyamide resin or other resin or resins having good heat and wear resistance. The connecting members 23 and the supporting columns 24 are formed generally in a rod shape so as to extend in the axial direction and are disposed alternately and at equal intervals in the circumferential direction. The inner circumferential surface formed by the boundary portion of the connecting members 23 and the base member 22, and the free ends of the supporting columns 24 is formed into essentially the same spherical surface as the outer circumferential surface of the bearing 9.

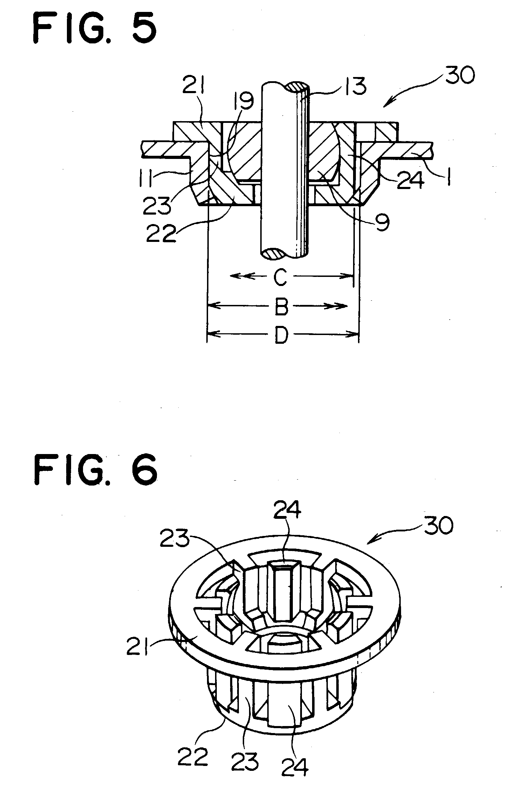

As can be seen from Figures 4 and 5, the outside diameter of the connecting members 23 is identified as B, the outside diameter of the supporting columns 24 as C, and the inside diameter of the retaining part 19 as D. The diameters B, C and D should preferably be related so that C < D < B. The outside diameter of the flange 21 is made slightly larger than the outside diameter B of the connecting members 23. The outside diameters B and C, and the inside diameter D are often as small as or less than 10 mm; less than 3 mm in many cases.

An effective means of forming the bearing retaining body 30 of Figures 4 to 6 is injection moulding. Since the entire bearing retaining body 30 is formed into a basket shape, there is no need for using a thin-walled movable core to form the gap 20, as described above in Figures 2 and 3. Thus, the cavity for forming the bearing retaining body 30 can be formed only by combining stationary and movable dies. This results in a simplified assembly of moulding dies.

When the bearing retaining body 30 is press-fitted into the retaining part 19 provided in the housing 1, as shown in Figure 5, the bearing retaining body 30 is held in the same manner as shown in Figure 2. In this case, however, only the connecting members 23 are elastically deformed, and even when the outside diameter B of the connecting members 23 is reduced to the inside diameter D of the retaining part 19, the force for retaining the bearing 9 is not adversely affected because the outside diameter C of the supporting columns 24 is smaller than the inside diameter of the retaining part 19 (C < D). The force for holding the bearing 9 can therefore be individually set to an adequate value because the free ends of the supporting columns 24 on the side of the flange 21 are not affected by the other supporting columns 24. Thus, the bearing holding force imparted by each of the supporting columns 24 can be kept uniform.

Although the above description has referred to the bearing retaining body being fitted at the closed end of the housing 1, it may additionally or alternatively be provided on the end plate.

The invention as described herein offers the following benefits.
(1) By forming the entire bearing retaining body constituting the bearing device into a basket shape, the need for using a thin-walled movable core as used in the prior art can be eliminated. This simplifies the construction of moulding dies, provide for improved mechanical strength of die members, and substantially improves moulding efficiency.
(2) By forming the bearing retaining body into a basket shape, the transmitted heat is prevented from being accumulative and can be dissipated more smoothly. This helps improve the heat resistance of the entire miniature motor, including the bearing device.
(3) Since the support columns holding the bearing are effectively formed independently of the connecting members to be press-fitted into the retaining part, and the outside diameter of the support columns is made smaller than the outside diameter of the connecting members, the supporting columns are not affected by press-fit allowance for the retaining part, and the force for holding the ball bearing can be kept at an appropriate level.
(4) Because of the circumferential distribution of the support columns, the force for holding the ball bearing can be kept uniform.

## Claims

1. A bearing device for supporting the rotor (5) in a miniature electric motor comprising a retaining body (30) of a resin material defining a recess with an annular base (22) and an annular flange (21)
CHARACTERISED IN THAT
the base (22) and flange (21) are connected by a plurality of circumferentially spaced members (23), and a plurality of columns (24) are circumferentially spaced on the base (22) and extend towards the flange (21), which columns (24) are adapted to support a spherical bearing (9) for a said rotor shaft (13) therebetween, the inside surfaces of the free ends of the support columns (24) and inner circumferential surfaces formed by boundary portions of the connecting members (23) and the base (22) defining a spherical surface for receiving a said bearing (9), the boundary portions of the support columns (24) and the base (22) being spaced from the spherical surface.

2. A bearing device according to Claim 1 wherein the support columns (24) and the connecting members (23) are arranged alternately around the base (22).

3. A bearing device according to Claim 1 or Claim 2 wherein the body (30) is fitted in a retention element (11) disposed in one of the closed end of a cylindrical motor housing (1) and the end plate (6) closing the open end thereof.

4. A bearing device according to any preceding Claim wherein a circle defined by the outer surfaces of the connecting members (23) has a diameter greater than a corresponding circle defined by the outer surfaces of the support columns (24).

5. A bearing device according to Claim 4 wherein said outer surfaces of the connecting members (23) and of the support columns (24) are on respective substantially cylindrical surfaces, that defined by the connecting members (23) being of greater diameter than that defined by the support columns (24).

6. A bearing device according to Claim 3, and to Claim 4 or Claim 5, wherein the retention element (11) has a substantially circular cross-section with a diameter greater than that of the circle defined by the support columns (24) but less than that of the circle defined by the connecting members (23).

7. A miniature electric motor comprising a cylindrical motor housing (1) with a closed end and an end plate (6) closing the open end, and a rotor (5) supported in a bearing device according to any preceding Claim mounted in each of the end plate (6) and the closed end of the housing (1).

## Patentansprüche

1. Eine Lagereinrichtung zur Halterung des Rotors (5) in einem elektrischen Miniaturmotor, einen Haltekörper (30) aus einem Kunstharz aufweisend, der eine Öffnung mit einem ringförmigen Sockel (22) und einem ringförmigen Flansch (21) bestimmt,
**dadurch gekennzeichnet,**
daß der Sockel (22) und der Flansch (21) durch mehrere auf dem Umfang verteilte Glieder (23) verbunden sind, und daß mehrere Säulen (24) an dem Sockel (22) auf dem Umfang angeordnet sind und sich zu dem Flansch (21) hin erstrecken, wobei die Säulen (24) so ausgeführt sind, daß sie ein kugelförmiges Lager (9) für die Motorwelle (13) zwischen sich aufnehmen, daß die Innnenflächen der freien Enden der Stützsäulen (24) und die inneren Umfangsflächen, die durch Begrenzungsstücke der Verbindungsglieder (23) und des Sockels (22) gebildet werden,eine kugelförmige Fläche für die Aufnahme des Lagers (9) bestimmen, wobei die Begrenzungsstücke der Stützsäulen (24) und des Sockels (22) von der kugelförmigen Fläche beabstandet sind.

2. Eine Lagereinrichtung nach Anspruch 1, wobei die Stützsäulen (24) und die Verbindungsglieder (23) abwechselnd um den Sockel (22) herum angeordnet sind.

3. Eine Lagereinrichtung nach Anspruch 1 oder Anspruch 2, wobei der Körper (30) in ein Halteteil (11) eingepaßt ist, das entweder in der geschlossenen Seite eines zylindrischen Motorgehäuses (1) oder in einer Endplatte (6) vorgesehen ist, die dessen offenes Ende abschließt.

4. Eine Lagereinrichtung nach einem der vorhergehenden Ansprüche, wobei ein durch die Außenflächen der Verbindungsglieder (23) bestimmter Kreis einen größeren Durchmesser aufweist, als ein entsprechender Kreis, der durch die Außenflächen der Stützsäulen (24) bestimmt wird.

5. Eine Lagereinrichtung nach Anspruch 4, wobei die Außenflächen der Verbindungsglieder (23) und der Stützsäulen (24) auf jeweils im wesentlichen zylindrischen Flächen liegen, wobei die durch die Verbindungsglieder (23) bestimmte dabei einen größeren Durchmesser aufweist, als die durch die Stützsäulen (24) bestimmte.

6. Eine Lagereinrichtung nach Anspruch 3 und nach Anspruch 4 oder 5, wobei das Halteteil (11) einen im wesentlichen kreisförmigen Querschnitt mit einem Durchmesser aufweist, der größer als derjenige des Kreises ist, der durch die Stützsäulen (24) bestimmt ist, aber kleiner als derjenige des Kreises, der durch die Verbindungsglieder (23) bestimmt ist.

7. Ein elektrischer Miniaturmotor, der ein zylindrisches Motorgehäuse (1) mit einer geschlossenen Seite und einer Endplatte (6) aufweist, die die offene Seite abschließt, und einem Rotor (5), der in einer Lagereinrichtung nach einem der vorhergehenden Ansprüche gehaltert ist, die in die Endplatte (6) als auch in die geschlossene Seite des Gehäuses (1) eingebaut ist.

## Revendications

1. Un dispositif de palier pour supporter le rotor (5) dans un moteur électrique miniature comprenant un corps de retenue (30) en un matériau de résine définissant un évidement avec une base annulaire (22) et un rebord annulaire (21), caractérisé en ce que la base (22) et le rebord (21) sont reliés par une pluralité d'éléments espacés circonférentiellement (23) et une pluralité de colonnes (24) sont espacées circonférentiellement sur la base (22) et se prolongent vers le rebord (21), lesquelles colonnes (24) sont adaptées pour supporter un palier sphérique (9) pour un arbre de rotor (13) entre elles, les surfaces intérieures des extrémités libres des colonnes de support (24) et les surfaces circonférentielles intérieures formées par les parties de délimitation des éléments de liaison (23) et la base (22) définissant une surface sphérique pour recevoir ledit palier (9), les parties de délimitation des colonnes de support (24) et la base (22) étant espacées à partir de la surface sphérique.

2. Un dispositif de palier selon la revendication 1, dans lequel les colonnes de support (24) et les éléments de liaison (23) sont disposés alternativement autour de la base (22).

3. Un dispositif de palier selon la revendication 1 ou la revendication 2, dans lequel le corps (30) est logé dans un élément de rétention (11) disposé dans l'une des extrémités fermées d'un carter de moteur cylindrique (1) et la plaque d'extrémité (6) fermant l'extrémité ouverte de celui-ci.

4. Un dispositif de palier selon l'une quelconque des revendications précédentes, dans lequel un cercle défini par les surfaces extérieures des éléments de liaison (23) a un diamètre supérieur à un cercle correspondant défini par les surfaces extérieures des colonnes de support (24).

5. Un dispositif de palier selon la revendication 4, dans lequel lesdites surfaces extérieures des éléments de liaison (23) et des colonnes de support (24) sont sur des surfaces respectives sensiblement cylindriques qui sont définies par les éléments de liaison (23) en étant d'un diamètre supérieur à celui défini par les colonnes de support (24).

6. Un dispositif de palier selon la revendication 3 et la revendication 4 ou la revendication 5, dans lequel l'élément de rétention (11) a une section transversale sensiblement circulaire avec un diamètre supérieur à celui du cercle défini par les colonnes de support (24) mais inférieur à celui du cercle défini par les éléments de liaison (23).

7. Un moteur électrique miniature comprenant un carter de moteur cylindrique (1) avec une extrémité fermée et une plaque d'extrémité (6) fermant l'extrémité ouverte, et un rotor (5) supporté dans un dispositif de palier selon l'une quelconque des revendications précédentes monté dans chacune de la plaque d'extrémité (6) et l'extrémité fermée du carter (1).
